# EUROPEAN PATENT SPECIFICATION

(11) **EP 0 592 192 B1**
(45) Date of publication and mention of the grant of the patent: **29.07.1998**
(21) Application number: 93307909.7
(22) Date of filing: 05.10.1993
(51) Int. Cl.: G11B 11/10, G11B 17/032, G11B 17/04, G11B 19/12

(54) **Magneto-optical recording and reproduction**
Magnetooptisches Aufnehmen und Wiedergabe
Enregistrement et reproduction magnétooptique

(30) Priority: 05.10.1992 KR 9218175; 01.06.1993 KR 939795; 01.06.1993 KR 939798; 01.06.1993 KR 939800
(43) Date of publication of application: 13.04.1994
(73) Proprietor: SAMSUNG ELECTRONICS CO., LTD., Suwon-city, Kyungki-do 441-373 (KR)
(72) Inventor: Eom, Jae-yong, Kwanak-gu, Seoul (KR)
(74) Representative: Stanley, David William

(56) References cited:
- EP-A- 0 437 091
- EP-A- 0 439 286
- EP-A- 0 455 158
- EP-A- 0 475 595
- EP-A- 0 501 337
- EP-A- 0 555 815
- PATENT ABSTRACTS OF JAPAN vol. 16, no. 308 (P-1381) 7 July 1992 & JP-A-04 085 702 (TOSHIBA CORP.) 18 March 1992

## Description

The present invention relates to magneto-optical recording and/or reproduction.

In general, a magneto-optical disk has an optical pickup for irradiating a focused light beam on a magneto-optical recording medium, a bias magnet for applying a magnetic field for the recording of desired information on the recording medium, and a recording layer used as the recording medium for the recording of information thereon or reproducing of recorded information therefrom. The recording layer is composed of a magnetic material, for example, terbium ferrum (TbF) or terbium ferrum cobalt (TbFeCo). Such magneto-optical disks are generally enclosed in caddies, the caddy itself being loaded on a disk drive, which have been developed for real-life applications.

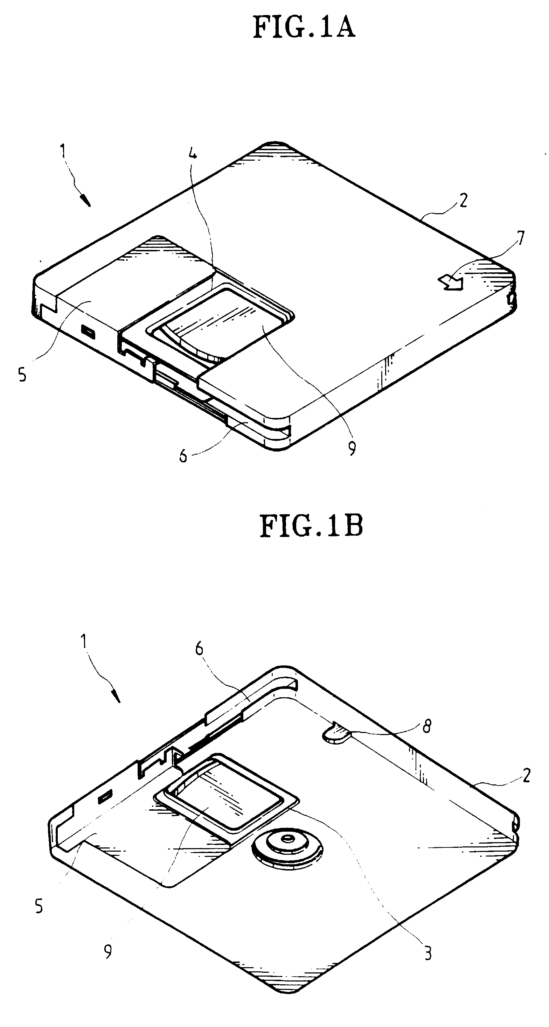

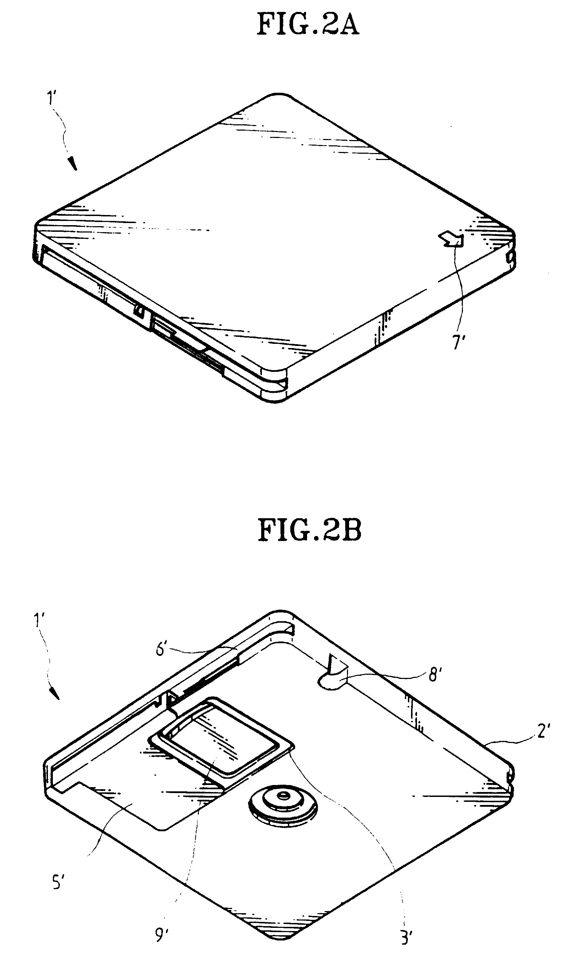

Further details of the present state of the art will now be given with reference to Figures 1 and 2 of the accompanying diagrammatic drawings, in which:
Figure 1A is a top perspective view of a recordable magneto-optical disk cartridge to which both the prior art and the present invention can be applied;
Figure 1B is a bottom perspective view of the recordable magneto-optical disk cartridge shown in Figure 1A;
Figure 2A is a top perspective view of a reproduction-only magneto-optical disk cartridge to which both the prior art and the present invention can be applied; and
Figure 2B is a bottom perspective view of the reproduction-only magneto-optical disk cartridge shown in Figure 2A.

In recent years, a magneto-optical disk cartridge, commercialized as a "mini disk" or MD, has been marketed by Sony. The mini-disk is about 64mm in diameter, and a player for the mini-disk is currently under development. There are two types of mini-disks currently on the market, a recordable type mini-disk 1 shown in Figures 1A and 1B and a reproduction-only type mini-disk 1' shown in Figures 2A and 2B.

Recordable mini-disk 1 has a cartridge shell 2 on both sides of which openings 3 and 4 are formed and a shutter 5 which shifts along a sliding groove 6 for the simultaneous opening or closing of openings 3 and 4. A disk 9 in cartridge shell 2 is exposed through openings 3 and 4 on two opposite sides of the cartridge shell.

On the other hand, reproduction-only mini-disk 1' has a cartridge shell 2' on one side of which an opening 3' is formed and a shutter 5' which shifts along a sliding groove 6' for the opening of opening 3'. Here, only one side of disk 9' is exposed via opening 3'.

In each of the above MDs, arrow marks 7 and 7' molded into the upper surfaces of cartridge shells 2 and 2' of mini-disks 1 and 1', respectively, indicate the direction in which the mini-disk is to be inserted into a player. Moreover, cartridge shells 2 and 2' have recognition grooves 8 and 8' of different depths, by which the inserted mini-disk can be identified as being a recordable-type mini-disk or a reproduction-only type mini-disk.

Sony's portable recording and/or reproducing player (model MZ-1) for mini-disks is currently on the market. This player comprises a slot for receiving the mini-disk in a slot-in method, a spindle motor for rotating the received mini-disk, an optical pickup for irradiating a focused light beam on one side of the disk, and a magnetic head for applying a magnetic field over the other side of the disk. The cartridge shell of the mini-disk which is received in the slot is loaded on a deck, with the shutter thereof slid open so as to open the opening. Simultaneously, the disk in the cartridge shell seats on a turn-table rotated by a spindle motor. During the rotation of the disk, if a reproduction mode is selected, the magnetic head remains lifted to an "up" position and the optical pickup alone operates. Here, if a recording mode is selected, the magnetic head is lowered to a "down" position by the motor so as to move together with the optical pickup which nearly contacts the opposite side of the disk. It should be noted that while the reproduction-only mini-disk is loaded, the magnetic head cannot be lowered even if the recording mode is selected.

EP 475,595 (Sony) discloses a prior art apparatus with a front loading arrangement and mechanical means for supporting and lowering the magnetic head. The means for supporting and lowering the magnetic head comprise a pivoting control unit having a different pivotal axis to that of the magnetic head support. The controlling unit includes a discriminating member which for recordable disks engages with a notch formed on the disk cartridge, the engagement of the discriminating member and notch allowing the control unit to pivot downwardly, which in turn allows the head support to move downwardly bringing the magnetic head toward the disk. The preamble of claim 1 reflects the disclosure of 475,595.

General requirements in portable disk players are that they should not only be light and compact, but should also operate by low electrical power. However, the Sony players for the use with mini-disks have a very complicated structure using the slot-in method type mini-disk inserting mechanism and the mechanism for raising the magnetic head by using a motor, and further requires a large amount of space for these mechanisms. Thus, the players cannot be miniaturized or lightened. Accordingly, the players exhibit a problem in that an excessive amount of power is required for the insertion or pulling back of the mini-disk and the raising and lowering of the magnetic head.

Players incorporating the pivoting type disk insertion mechanism are known from EP-A-437 091 and JP-A-4085702. Preferred embodiments of the present invention aim to provide a magneto-optical recording and/or reproducing apparatus which is light-weight and small and consumes little power, so as to be suitable for portability.

It is another aim to provide a magneto-optical recording and/or reproducing apparatus in which a magneto-optical disk cartridge is mechanically loaded/unloaded from the main body.

It is yet another aim to provide a magneto-optical recording and/or reproducing apparatus in which a magnetic head is mechanically raised and lowered according to whether or not the magneto-optical disk cartridge loaded on the main body is recordable.

According to one aspect of the present invention, there is provided a magneto-optical recording and/or reproducing apparatus for recording and/or reproducing information, using a disk cartridge which receives a magneto-optical disk in a rotatable state and having a deck on which the disk cartridge is arranged to be loaded, an optical pickup assembly movably seated on the deck to project a focused light beam on to one surface of the magneto-optical disk, and a magnetic head for applying a magnetic field on to the other surface of the magneto-optical disk, said apparatus comprising: a cartridge holding member which receives an externally supplied disk cartridge a connecting member which operates so that the magnetic head is arranged to move together with the optical pickup assembly in a radial direction of the magneto-optical disk and which is pivotable with respect to the deck and the optical pickup assembly; and magnetic head lifting means for raising or lowering the magnetic head with respect to an inserted disk cartridge according to whether or not the disk cartridge is of a recordable type or a playback only type, the apparatus being characterised in that said cartridge holding member is pivotally mounted with respect to the deck, so that the received is moveable between a closing position in which the disk cartridge is loaded on top of the deck and an opening position in which the received disk cartridge is detached from the top of the deck to be unloaded; and that said magnetic head is normally in a supported state in which the magnetic head is in a raised position, said magnetic head lifting means comprising a slide member slideably mounted with respect to the cartridge holding member, which slide member has a contact element which, if the disk cartridge is not recordable, is arranged, upon loading of the disk cartridge to be inserted into a recognition groove of the disk cartridge ( and which, if the disk cartridge is recordable, is arranged upon loading of the disk cartridge, to be pushed by a leading edge of the disk cartridge so that the slide member slides in a direction of insertion of the disk cartridge by a predetermined distance, movement of the slide member causing said magnetic head to cease being held in the supported state and to lower towards the magneto-optical disk.

Preferably, said connecting member comprises a pickup connecting portion connected to the optical pickup assembly, a head connecting portion connected to the magnetic head, and a hinge for connecting the pickup connecting portion and the head connecting portion.

A spring member may be provided for elastically biasing the head connecting portion towards the deck.

The angle of the head connecting portion is preferably adjustable with respect to the pickup connecting portion so as to adjust the horizontal position of the magnetic head.

Said slide member may be elastically biased so as to normally be in a position in which the magnetic head is held in the supported state.

Preferably, in the supported state an interlocking member of said slide member is arranged to cooperate with a protruded portion of said head connecting portion to hold the magnetic head in a raised position.

Slide member locking means are preferably provided for locking the moving state of the slide member and releasing the locking state, by being interlocked with a motion for extracting the disk cartridge.

Said slide member locking means may comprise a slide locking member arranged to move perpendicularly to the moving direction of the slide member.

Extracting means may be provided for extracting the disk cartridge received in the cartridge holding member when the cartridge holding member moves from a loaded position to an unloaded position.

Said extracting means may comprise: an extracting member for pushing the disk cartridge received in the cartridge holding member in an extracting direction; a locking member for locking the extracting member; and a locking release member interlocked with the cartridge holding member so as to move to operate the locking member.

Preferably, said extracting member has a contact portion for contact with the disk cartridge inserted into the cartridge holding member, is arranged to move by the contact portion in the inserting direction of the disk cartridge and is elastically biased to return the moved disk cartridge.

Said locking member is preferably pivotally mounted to be rotatable and to be elastically biased in one direction, having a locking pin interlocked with the extracting member and a releasing pin interlocked with the locking releasing member.

Said locking releasing member is preferably moveable and has a unidirectional elastic member which operates the locking member when moved in one direction and does not operate the locking member when moved in the opposite direction.

In preferred embodiments of the present invention, the cartridge holding member which is simplified and rotatably opens/closes is used so as to load the disk cartridge to the deck. Since the cartridge holding member only has enough receiving space for the disk cartridge loaded on the deck to be seated, the cartridge holding member occupies less space than that of a conventional slot-in configuration. Also, the power consumption is reduced since the member can be manually operated. Further, since the magnetic head is raised/lowered by mechanically engaging with the disk cartridge inserted into the holding member, the space occupied by the motor for raising and lowering the magnetic head is reduced while reducing power consumption. Accordingly, such magneto-optical recording and/or reproducing apparatus can be further minimized, consume less power, and is suitable for portability.

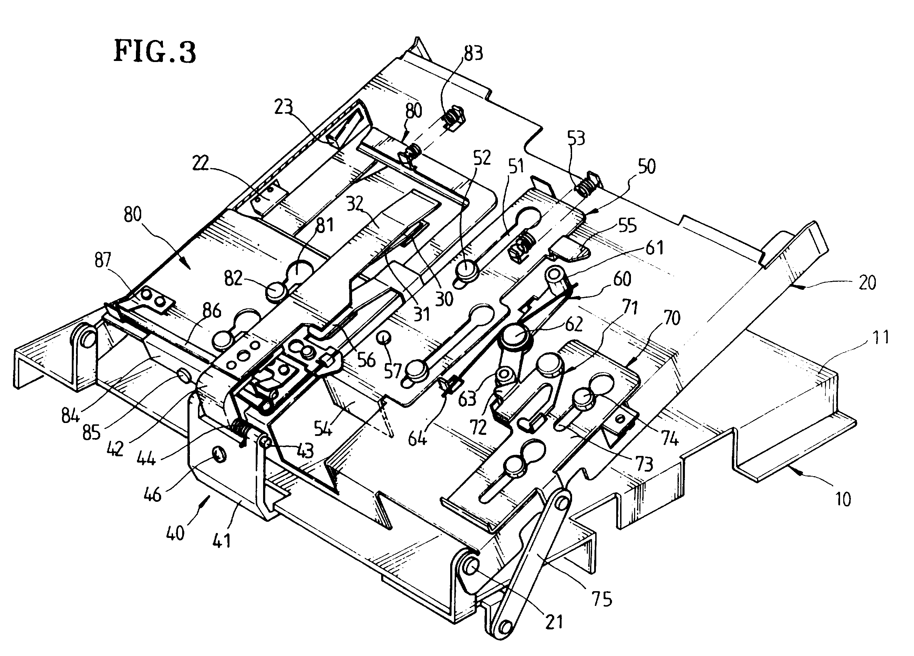

For a better understanding of the invention, and to show how the same may be carried into effect, reference will now be made, by way of example, to Figures 3 to 20 of the accompanying diagrammatic drawings, in which:
Figure 3 is a perspective view of one example of a magneto-optical recording and/or reproducing apparatus of the present invention in which a cartridge holding member is opened;

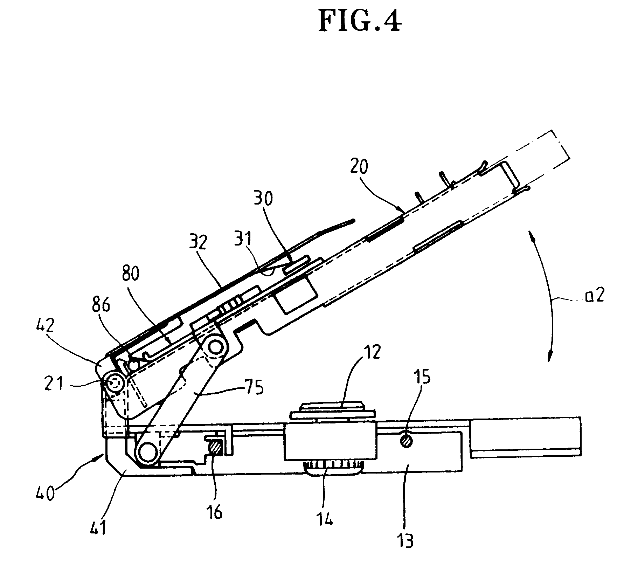

Figure 4 is a side view of the magneto-optical recording and/or reproducing apparatus of Figure 3;

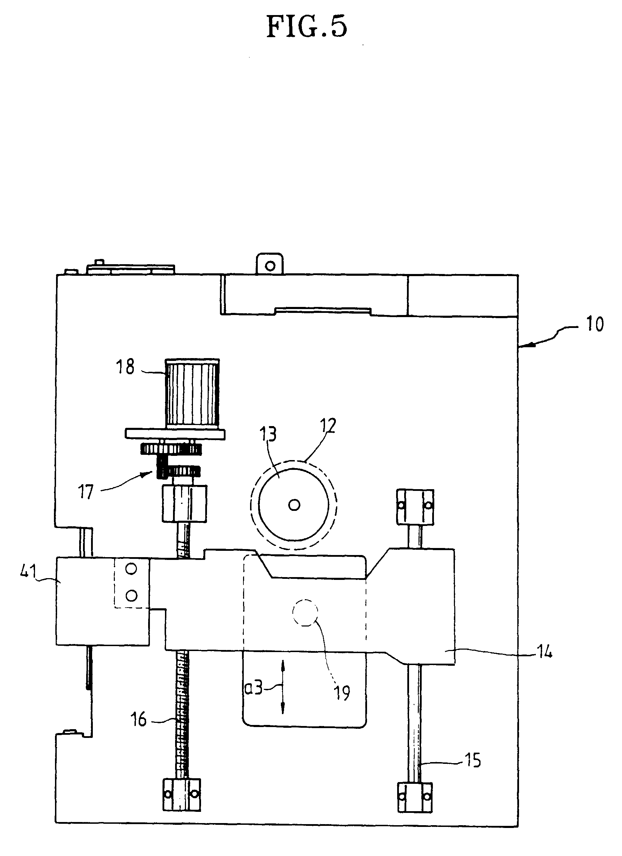

Figure 5 is a bottom view of the magneto-optical recording and/or reproducing apparatus of Figure 3, showing the bottom of a deck;

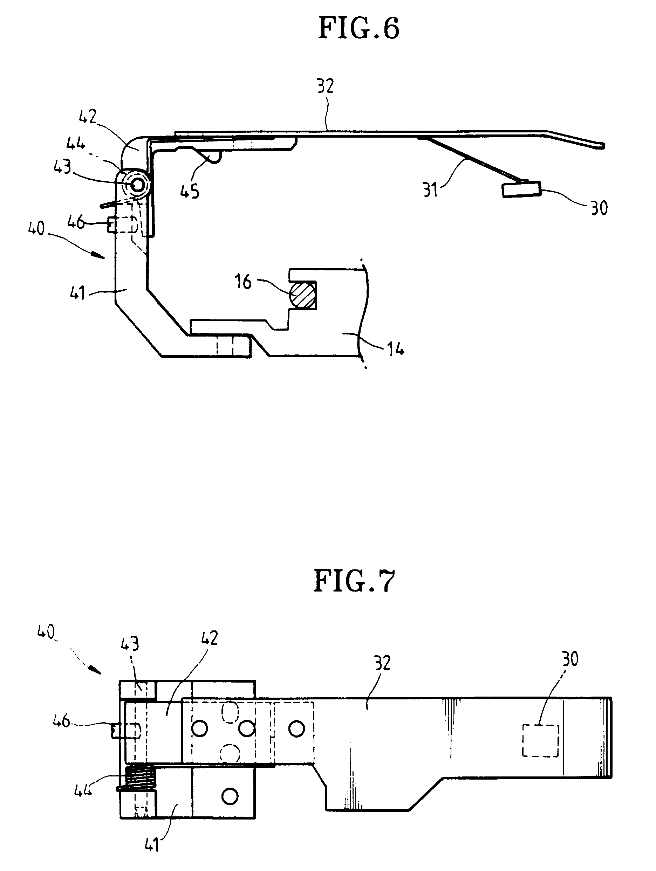

Figure 6 is a side view of a connecting portion of an optical pickup assembly and magnetic head of the magneto-optical recording and/or reproducing apparatus of Figure 3;
Figure 7 is a plan view of the connecting portion of the optical pickup assembly and magnetic head shown in Figure 6;

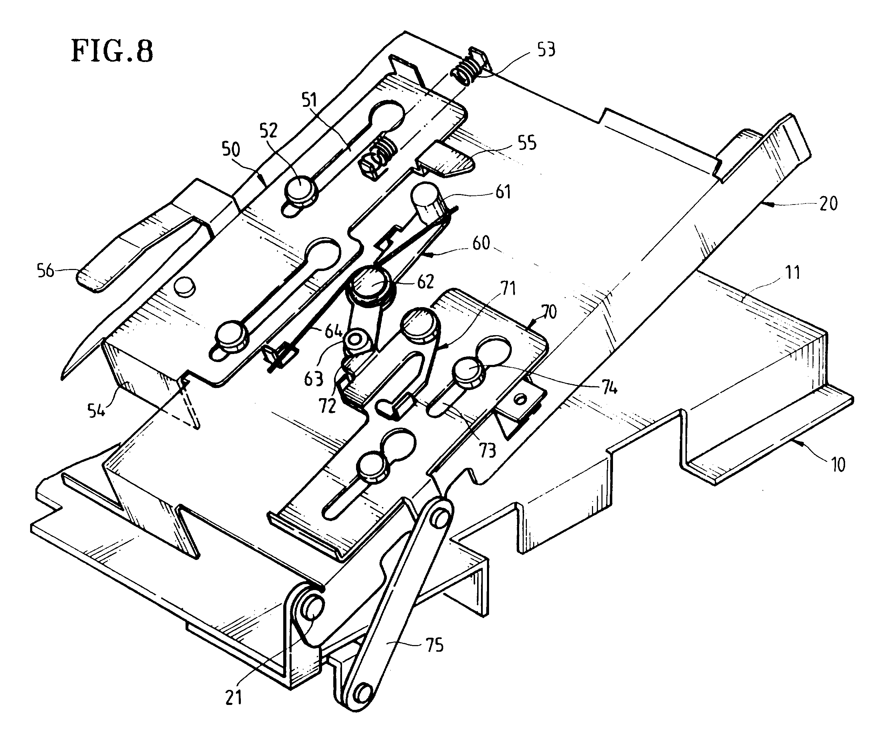

Figure 8 is a perspective view of a cartridge extracting portion of the magneto-optical recording and/or reproducing apparatus shown in Figure 3;

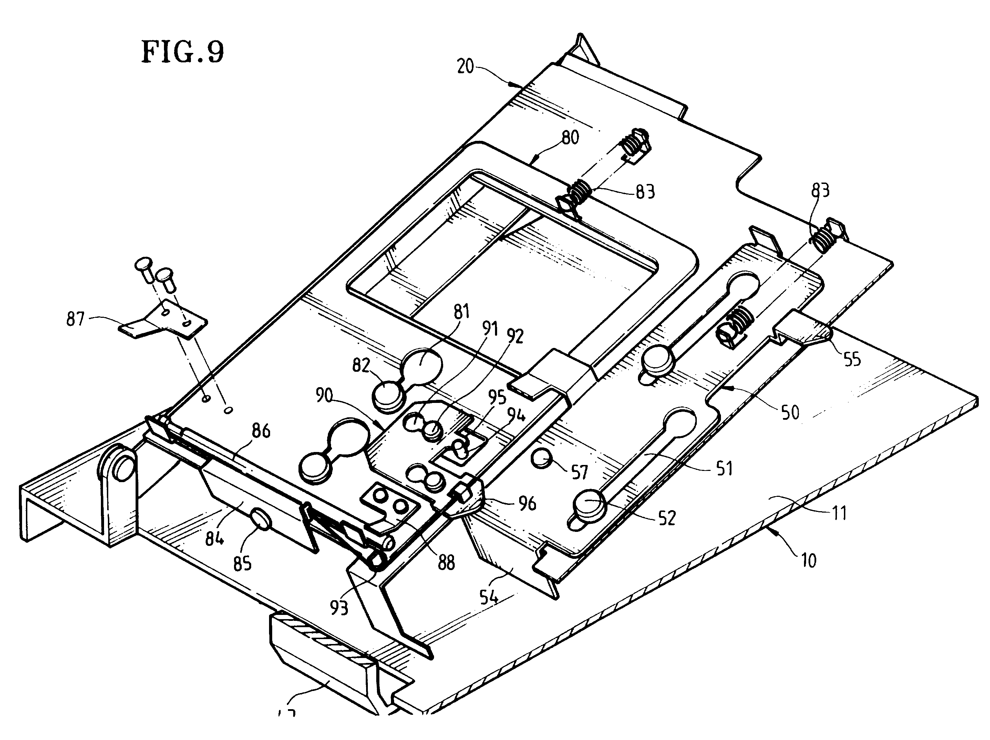

Figure 9 is a perspective view of a magnetic head raising/lowering portion of the magneto-optical recording and/or reproducing apparatus shown in Figure 3;

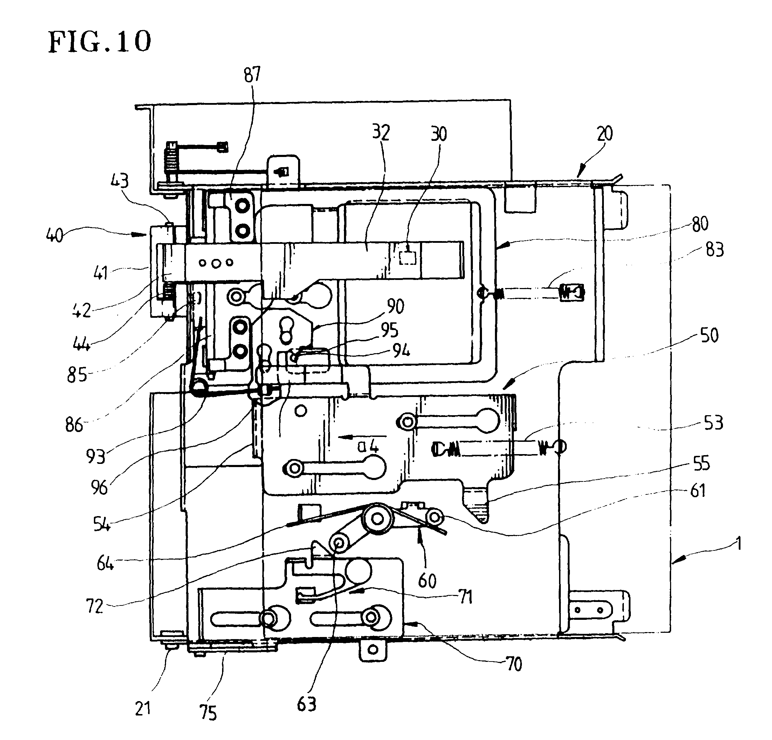

Figure 10 is a plan view to illustrate an initial state in which a mini disk is inserted into a cartridge holding member of the magneto-optical recording and/or reproducing apparatus of Figure 3;

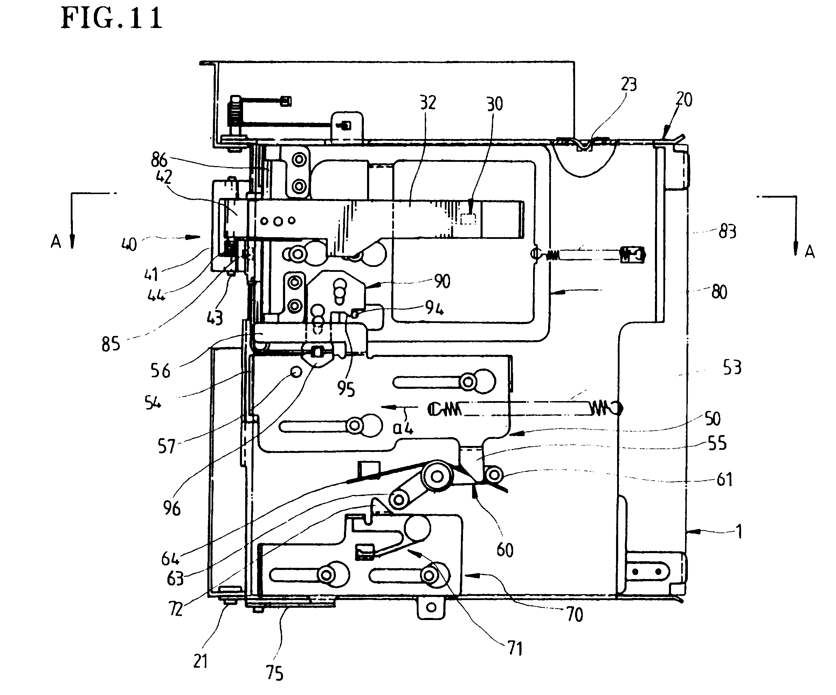

Figure 11 is a plan view to illustrate a state in which a recordable mini disk is inserted into the cartridge holding member of the magneto-optical recording and/or reproducing apparatus of Figure 3;

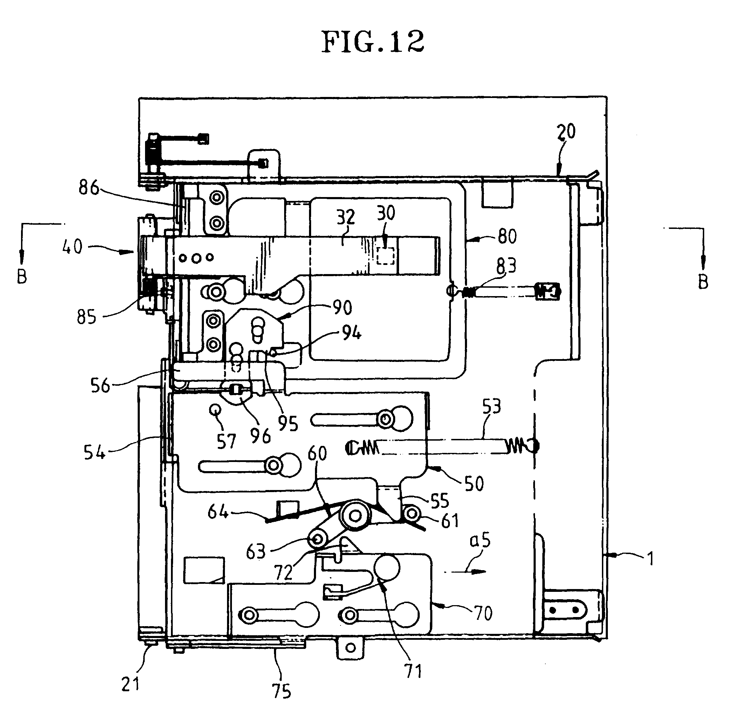

Figure 12 is a plan view to illustrate a state in which a recordable mini disk inserted into the cartridge holding member of the magneto-optical recording and/or reproducing apparatus of Figure 3 has finished being loaded onto the deck;

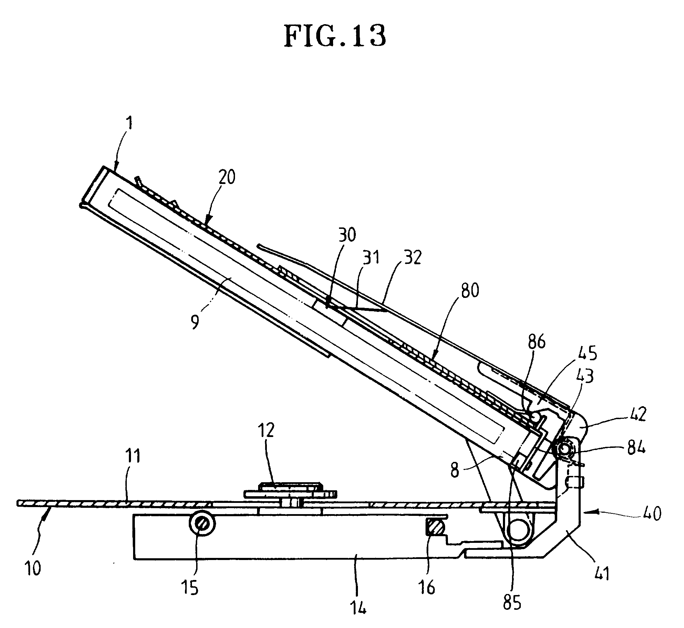

Figure 13 is a cross-sectional view of the magneto-optical recording and/or reproducing apparatus, taken along line A-A of Figure 11;

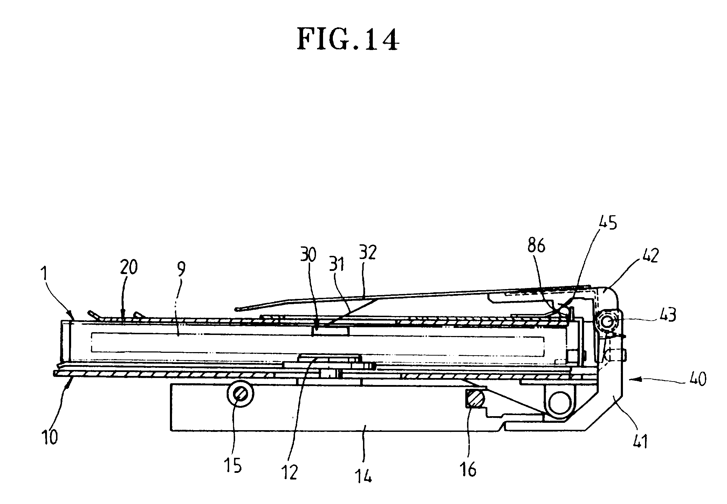

Figure 14 is a cross-sectional view of the magneto-optical recording and/or reproducing apparatus, taken along line B-B of Figure 12;

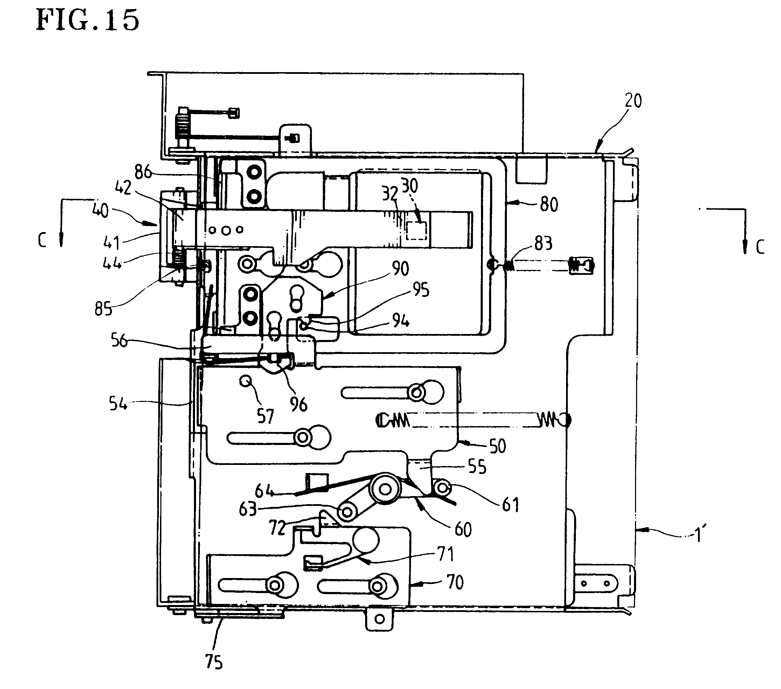

Figure 15 is a plan view to illustrate a state in which a reproduction-only mini disk is inserted into the cartridge holding member of the magneto-optical recording and/or reproducing apparatus of Figure 3;

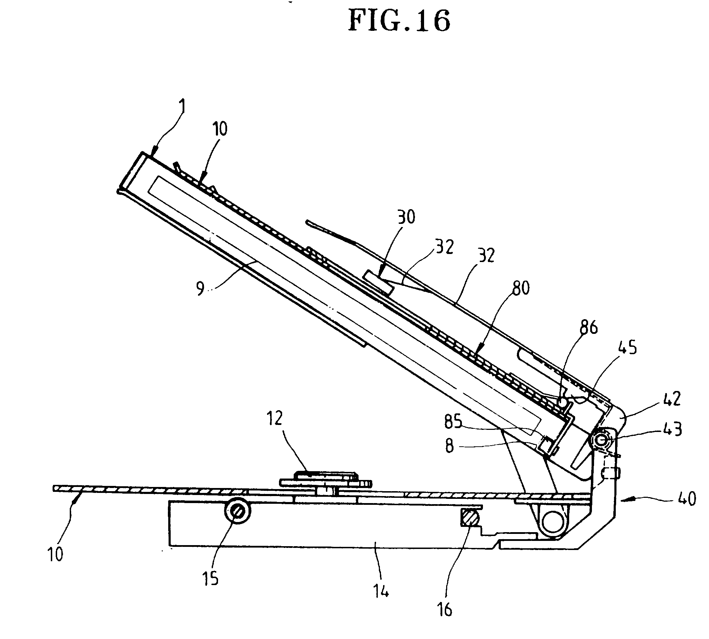

Figure 16 is a cross-sectional view of the magneto-optical recording and/or reproducing apparatus, taken along line C-C of Figure 15;

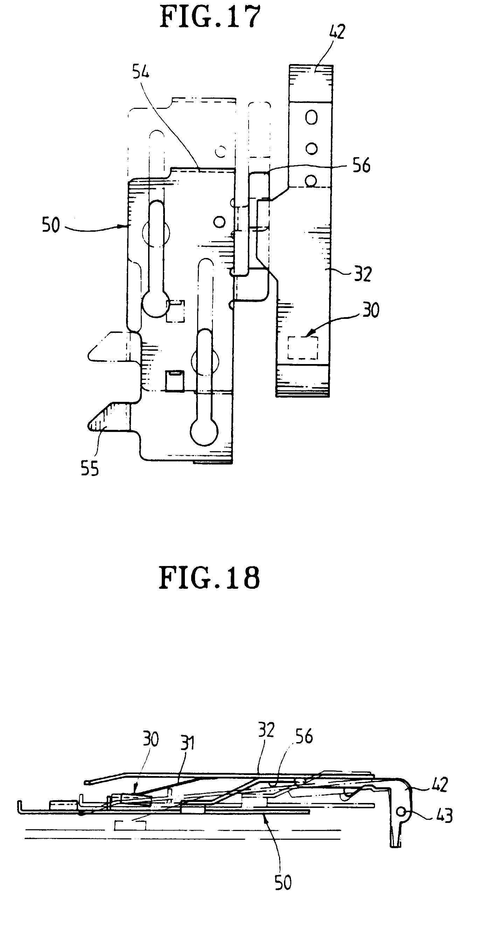

Figure 17 is a plan view for illustrating the operation of a cartridge extracting member and head supporting member of the magneto-optical recording and/or reproducing apparatus of Figure 3;
Figure 18 is a side view for illustrating the operation of the cartridge extracting member and the head supporting member shown in Figure 17;

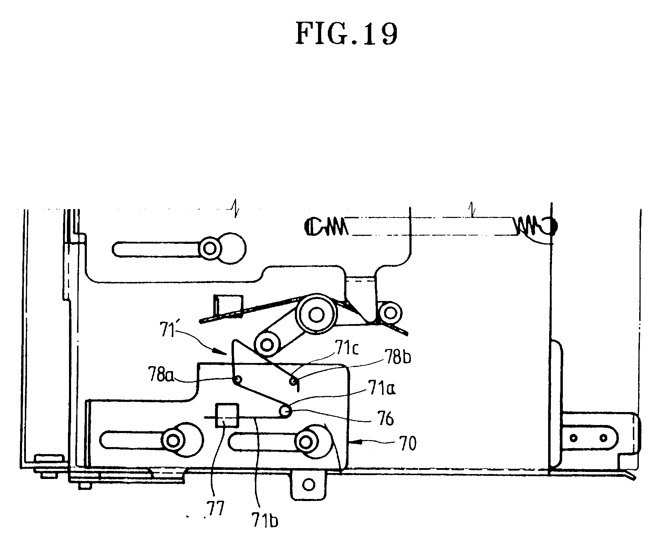

Figure 19 is a plan view of a cartridge extracting portion according to another embodiment of the present invention which corresponds to that shown in Figure 8; and

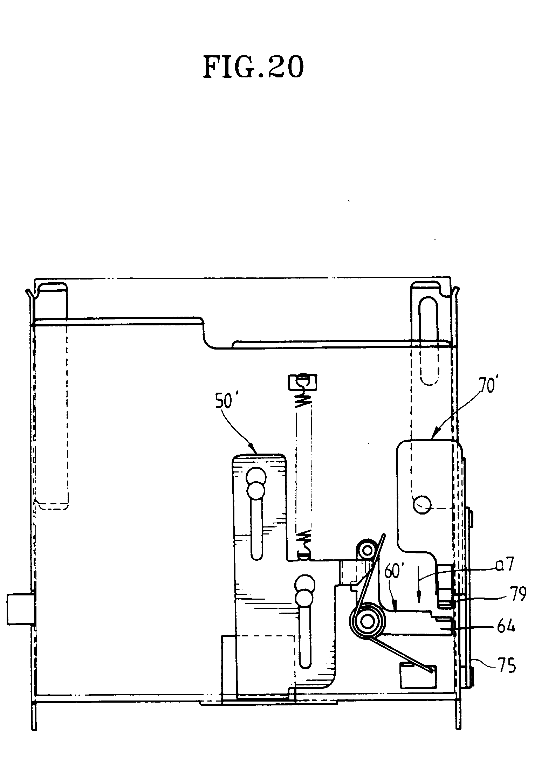

Figure 20 is a plan view of a cartridge extracting portion according to still another embodiment of the present invention which corresponds to those shown in Figures 8 and 19.

A preferred embodiment of a magneto-optical recording and reproducing apparatus according to the present invention will hereinafter be described in more detail, by way of example only, with reference to the attached drawings.

In Figure 3, reference numeral 10 denotes a deck while 20 denotes a cartridge holding member. Deck 10 has an upper surface 11 on which a mini-disk 1 of Figure 1 or mini-disk 1' of Figure 2 may be loaded. Referring to Figures 4 and 5, a turn-table 12 for receiving the magneto-optical mini-disk is installed on upper surface 11. Turn-table 12 connects with a spindle motor 13 established beneath deck 10. An optical pickup assembly 14 is installed below deck 10, with the optical pickup assembly supported by a guide bar 15 and screw axis 16 which are parallel to each other so as to be moved in a direction a3 by the rotation of screw axis 16. Screw axis 16 connects with a transporting motor 18 via a gear group 17. Optical pickup assembly 14 includes an objective lens 19, and irradiates the light beam focused by objective lens 19 onto the surface of the magneto-optical disk seated on turn-table 12 of deck 10. Optical pickup assembly 14 receives the reflected light beam from the magneto-optical disk, and thereby detects an electrical signal, i.e. a reproducing signal.

Referring to Figure 3, cartridge holding member 20 receives mini-disk 1 of Figure 1 or mini-disk 1' of Figure 2 which is inserted in a direction a1, with the cartridge holding member hinge-combined with deck 10 so as to be rotated in a direction a2 as shown in Figure 4 to meet the upper surface of deck 10. Cartridge holding member 20 has on one sidewall thereof a shutter opener 22 for opening a shutter 5 or 5' (Figure 1 or Figure 2) when mini-disk is inserted and a shutter closure 23 for returning the shutter when the mini-disk is pulled back.

A magnetic head 30 is installed above cartridge holding member 20. Magnetic head 30 is attached to one end of a flexible plane spring 31 which is supported by a head supporting member 32. A connecting member 40 for combining optical pickup assembly 14 and head supporting member 32, as shown in Figures 6 and 7, comprises a pickup connection portion 41 fixed on optical pickup assembly 14, a head connection portion 42 connected to head supporting member 32, and a hinge portion 43 for combining pickup connection portion 41 and head connection portion 42. Hinge portion 43 and hinge 21 connecting deck 10 with cartridge holding member 20 are on the same axis. Therefore, optical pickup assembly 14 and magnetic head 30 can be transported in the a3 direction of Figure 5 by means of connection member 40, and magnetic head 30 can rotate in the a2 direction, which is the same as that of the opening and closing movement of cartridge holding member 20, together with head supporting member 32 and head connection portion 42. On the other hand, magnetic head 30 is elastically biased downward by means of a torsion spring 44 which extends to head connection portion 42 and is fitted over hinge portion 43 as a sleeve. Head connection portion 42 of connection member 40 has a protrusion 45 which protrudes downwardly, for connection with magnetic head lifting means described later. In addition, controlling screw 46 is screw-coupled with pickup connection portion 41 by boring thereinto, while one end of the controlling screw contacts an end portion of head connection portion 42. The controlling screw is for controlling the horizontal status of head supporting member 32.

Referring to Figures 3 and 8, cartridge holding member 20 has on the upper surface thereof extracting means for ejecting forward the received mini-disk, while the extracting means comprises an extracting member 50, a locking member 60 and a locking releasing member 70.

Extracting member 50 is supported to be capable of being transported forward or backward by means of a groove 51 and a supporting pin 52, and is elastically biased by spring 53 in a forward direction. Extracting member 50 comprises a contact portion 54 contacting the front of a received mini-disk, a locking end 55 designed to be caught by locking pin 61 of locking member 60, and a head holder 56 extended beside ejection member 50 for holding up head supporting member 32 of magnetic head 30.

Locking member 60 is supported by a pivot 62 to be capable of being rotated, while being elastically biased counterclockwise by a torsion spring 64, and has a locking releasing pin 63 on the opposing side thereof. Locking releasing pin 63 moves along with protrusion 72 of spring member 71 supported by locking releasing member 70, so that locking pin 61 retreats in the clockwise direction.

Locking releasing member 70 is supported by groove 73 and supporting pin 74 to be capable of being translated forward or backward, and connects with deck 10 via link 75. Locking releasing member 70 is interlocked with the opening and closing movement of cartridge holding member 20, thereby to move forward or backward on cartridge holding member 20 with spring member 71.

In Figure 3, a slide member 80 is installed on the upper surface of cartridge holding member 20. Slide member 80 recognizes whether or not the received mini-disk is the recordable type. If a recordable mini-disk 1 (Figure 1) is received, the slide member interlocks with mini-disk 1 to raise or lower magnetic head 30. Slide member 80 is supported by groove 81 and supporting pin 82 to move a short distance forward or backward, as shown in Figure 9, and is elastically biased forwardly by spring 83. Also, sliding member 80 has a protruded pin 85 on a bent portion 84 thereof. Protruded pin 85 is located to meet a recognition groove 8 or 8' (Figure 1 or Figure 2) of mini-disk 1 or 1', so that the pin cannot be inserted into recognition groove 8 of a recordable mini-disk 1, but can be inserted into recognition groove 8' of reproduction-only mini-disk 1'.

Referring to Figure 9, a head holding bar 86 is installed on slide member 80 and held in place by two fixing plates 87 and 88, and is about the same length as the radius of the magneto-optical disk. Slide member 80 has a supporting pin 91, and a locking member 90 having a groove is supported by supporting pin 91 to slightly move latitudinally. In addition, the locking member is elastically biased toward extracting member 50 by torsion spring 93. Slide locking member 90 includes a locking portion 95 which catches on the rear part of a locking pin 94 installed on cartridge holding member 20 and a locking releasing portion 96 triggered by a triggering pin 57 installed on extracting member 50 so as to retreat upwardly to unlock the engagement between locking portion 95 and locking pin 94.

An example of operation of the magneto-optical recording and reproducing apparatus according to an embodiment of the present invention will be described, hereinafter.

Figures 10-14 illustrate the operation of the apparatus, using a recordable mini-disk 1. Provided that cartridge holding member 20 opens, mini-disk 1 is injected into cartridge holding member 20 as shown in Figure 10. Therefore, the front part of mini-disk 1 just injected contacts a contact portion 54 of extracting portion 50. In the meantime, if mini-disk 1 is pushed in further, extracting portion 50 is slid in a direction a4, thereby to extend spring 53. Consequently, locking part 55 of extracting member 50 is caught and locked by a locking pin 61 of a locking member 60. Locking pin 55, one side of which is sloped, advances while pushing locking pin 61 downward, and then locking pin 61 returns back immediately, so that the locking function is completed as shown in Figure 11.

Referring to Figure 13, it can be seen that a protruded pin 85 established in bending portion 84 of sliding member 80 does not enter recognition groove 8 of mini-disk 1, but contacts the forepart of mini-disk 1. Accordingly, slide member 80 is pushed back thereby to retract holding bar 86 which supports protruded portion 45 of head connection portion 42 of connection member 40. Next, magnetic head 30 is lowered to make contact with magneto-optical disk 9 of mini-disk 1.

In the meantime, slide member 80 is pushed back a short distance from the initial position. Locking portion 95 of locking member 90 is locked by locking pin 94, as shown in Figure 11, so that a spring 83 for restoring slide member 80 prevents mini-disk 1 from coming back out via its insertion path.

Referring to Figure 13, when cartridge holding member 20 moves down to load mini-disk 1 being held in cartridge holding member 20 on the upper surface of deck 10, protrusion 72 of spring member 71 supported by locking releasing member 70 moves in a direction a5, as shown in Figure 12, by the interlocking of cartridge holding member 20 and link 75 (Figure 3), thereby to be positioned in front of locking releasing pin 63 of locking member 60. Spring member 71 has a lower elasticity than that of a torsion spring 64 elastically biasing locking member 60 in a counterclockwise direction, which prevents the possible release of locking member 60. In the closed condition as shown in Figure 14, the magneto-optical recording and reproducing apparatus can selectively perform a predetermined recording and/or reproduction function.

Next, to extract mini-disk 1 from the position of Figure 14 cartridge holding member 20 is opened, so that link 75 pulls locking releasing member 70 in the opposite direction of a5 denoted in Figure 12. Accordingly, spring member 71 of locking releasing member 70 pushes locking releasing pin 64 of locking member 60, and thereby locking member 60 rotates counterclockwise. Thus, locking pin 61 is released from locking part 55 of extracting member 50, for unlocking. Namely, extracting member 50 becomes unlocked thereby to move in the opposite direction of a4 (Figure 11) due to the restoring force of spring 53 which has been stretched, whereby mini-disk 1 is ejected as in Figure 10.

In the meantime, triggering pin 57 of extracting member 50 moves along the ejecting direction, while triggering locking releasing portion 96 of slide locking member 90. Therefore, slide locking member 90 is pushed upward so as for the locking portion 95 to be released from locking pin 94, whereby slide member 80 returns to its initial position. Accordingly, holding bar 86 also returns to its initial position, so that magnetic head 30 moves upward. Head holder 56 formed on head supporting member 32 of magnetic head 30 of extracting member 50 moves in the ejecting direction as shown in Figures 17 and 18, thereby moving head supporting member 32 upward. Therefore, damage to mini-disk 1 during its ejection is prevented because magnetic head 30 does not come into contact with the surface of the mini-disk.

On the other hand, when reproduction-only mini-disk 1' is received, protruded pin 85 of slide member 80 is inserted into recognition groove 8' of mini-disk 1', so as not to push slide member 80 as shown in Figure 16. Here, protrusion 45 of head connection portion 42 is supported by holding bar 86 coupled with slide member 80, which thereby prevents the downward movement of magnetic head 30. Also, slide member 80 remains in an unpushed condition, so that slide locking member 90 supported by slide member 80 can stay in its original location (Figure 10). All other operations are the same as those of the recordable mini-disk.

Thus, according to the illustrated embodiment of the present invention, the reproduction-only mini-disk without the shutter on the upper surface thereof avoids contact with the magnetic head. Therefore, recording and reproduction can be performed most optimally.

Figure 19 shows another embodiment of an extracting means according to the present invention. A locking releasing member 70 is combined with a spring member 71'. Spring member 71' is shaped into multiple bends along an S-shaped path, whose middle portion 71a is supported by a fixing pin 76, whose one end 71b is permanently supported by a fixed protrusion 77 and whose other end 71c is supported by two guide supporting pins 78a and 78b, while fixing pin 76 and fixed protrusion 77 are installed on locking releasing member 70. End 71c of spring member 71' is elastically bent only by the movement of locking releasing member 70 in a direction a6, but is not bent by movement in the reverse direction. Therefore, locking releasing pin 63 of locking member 60 is struck so that locking member 60 rotates only during the opening of cartridge holding member 20. However, conversely, locking member 60 does not rotate in the case of closing cartridge holding member 20.

Next, Figure 20 shows another embodiment of an extracting means according to the present invention. Here, the aforementioned spring member is excluded, and instead, an end portion 64 of locking member 60' is formed longer and a contacting member 79 is established on locking releasing member 70' so as to contact end portion 64. Thus, when cartridge holding member 20 is opened, locking releasing member 70' moves in an a7 direction, and contacting member 79 pushes the end portion of locking member 60'. Thus, locking member 60' rotates for the unlocking of extracting member 50'.

The above-described examples of the magneto-optical recording and reproducing apparatus according to the present invention have a simple structure by which a disk cartridge is loaded or unloaded with the insertion to a door-type cartridge holding member, and therefore the apparatus can be compacted to a portable size. Also, no power is required for the opening or closing of the cartridge holding member and for the raising and lowering of the magnetic head, which therefore saves electrical power. Accordingly, examples of the present invention can provide a miniaturized magneto-optical recording and/or reproducing apparatus capable of being mounted on computer systems as well as being conveniently carried and used.

## Claims

1. A magneto-optical recording and/or reproducing apparatus for recording and/or reproducing information, using a disk cartridge (1, 1') which receives a magneto-optical disk (9, 9') in a rotatable state and having a deck (10) on which the disk cartridge (1, 1') is arranged to be loaded, an optical pickup assembly (14) movably seated on the deck (10) to project a focused light beam on to one surface of the magneto-optical disk (9, 9'), and a magnetic head (30) for applying a magnetic field on to the other surface of the magneto-optical disk (9, 9'), said apparatus comprising:
a cartridge holding member (20) which receives an externally supplied disk cartridge (1, 1');
a connecting member (40) which operates so that the magnetic head (30) is arranged to move together with the optical pickup assembly (14) in a radial direction of the magneto-optical disk (9, 9') and which is pivotable with respect to the deck and the optical pickup assembly (14); and
magnetic head lifting means for raising or lowering the magnetic head with respect to an inserted disk cartridge (1, 1') according to whether or not the disk cartridge (1, 1') is of a recordable type (1) or a playback only type (1'),
the apparatus being characterised in that said cartridge holding member is pivotally mounted with respect to the deck (10), so that the received disk cartridge (1, 1') is moveable between a closing position in which the disk cartridge (1, 1') is loaded on top of the deck (10) and an opening position in which the received disk cartridge (1, 1') is detached from the top of the deck (10) to be unloaded and that said magnetic head is normally in a supported state in which the magnetic head is in a raised position, said magnetic head lifting means comprising a slide member (80) slideably mounted with respect to the cartridge holding member (20), which slide member (80) has a contact element (85) which, if the disk cartridge (1, 1') is not recordable, is arranged, upon loading of the disk cartridge (1) to be inserted into a recognition groove (8') of the disk cartridge (1') and which, if the disk cartridge (1, 1') is recordable, is arranged upon loading of the disk cartridge (1), to be pushed by a leading edge of the disk cartridge (1) so that the slide member (80) slides in a direction of insertion of the disk cartridge (1) by a predetermined distance, movement of the slide member (80) causing said magnetic head (30) to cease being held in the supported state and to lower towards the magneto-optical disk (9).

2. An apparatus as claimed in claim 1, wherein said connecting member (40) comprises a pickup connecting portion (41) connected to the optical pickup assembly (14), a head connecting portion (42) connected to the magnetic head (30), and a hinge (43) for connecting the pickup connecting portion (41) and the head connecting portion (42).

3. An apparatus as claimed in claim 2, further comprising a spring member (44) for elastically biasing the head connecting portion (42) towards the deck (10).

4. An apparatus as claimed in claim 2 or 3, wherein the angle of the head connecting portion (42) is adjustable with respect to the pickup connecting portion (41) so as to adjust the horizontal position of the magnetic head (30).

5. An apparatus as claimed in any of the preceding claims, wherein said slide member (80) is elastically biased so as to normally be in a position in which the magnetic head is held in the supported state.

6. An apparatus as claimed in any of the preceding claims, in which, in the supported state an interlocking member (86) of said slide member (80) is arranged to cooperate with a protruded portion (45) of said head connecting portion to hold the magnetic head (30) in a raised position.

7. An apparatus as claimed in any of the preceding claims, further comprising slide member locking means (90) for locking the moving state of the slide member (80) and releasing the locking state, by being interlocked with a motion for extracting the disk cartridge.

8. An apparatus as claimed in claim 7, wherein said slide member locking means (90) comprises a slide locking member arranged to move perpendicularly to the moving direction of the slide member (80).

9. Apparatus as claimed in any of the preceding claims, further comprising extracting means (50) for extracting the disk cartridge (1, 1') received in the cartridge holding member (20) when the cartridge holding member (20) moves from a loaded position to an unloaded position.

10. An apparatus as claimed in claim 9, wherein said extracting means (50) comprises:
an extracting member (50) for pushing the disk cartridge (1, 1') received in the cartridge holding member (20) in an extracting direction;
a locking member (60) for locking the extracting member (50); and
a locking release member (70) interlocked with the cartridge holding member (20) so as to move to operate the locking member (60).

11. An apparatus as claimed in claim 10, wherein said extracting member (50) has a contact portion (54) for contact with the disk cartridge (1, 1') inserted into the cartridge holding member (20), is arranged to move by the contact portion (54) in the inserting direction of the disk cartridge (1, 1') and is elastically biased to return the moved disk cartridge (1, 1').

12. An apparatus as claimed in claim 10 or 11, wherein said locking member (60) is pivotally mounted to be rotatable and to be elastically biased in one direction, having a locking pin interlocked with the extracting member (50) and a releasing pin (63) interlocked with the locking releasing member (70).

13. An apparatus as claimed in claim 10, 11 or 12 wherein said locking releasing member (70) is moveable and has a unidirectional elastic member (71) which operates the locking member (60) when moved in one direction and does not operate the locking member (60) when moved in the opposite direction.

## Patentansprüche

1. Magneto-optische Aufzeichnungs- und/oder Wiedergabe-Vorrichtung zum Aufzeichnen und/oder Wiedergeben von Information mit Benutzen einer Plattenkassette (1,1'), die eine magneto-optische Platte (9,9') in einem drehbaren Zustand aufnimmt, und mit einem Deck (10), auf das geladen zu werden die Plattenkassette (1,1') ausgelegt ist, einer optischen Aufnehmeranordnung (14), die an dem Deck (10) bewegbar angesetzt ist, um ein fokussiertes Lichtbündel auf eine Oberfläche der magneto-optischen Platte (9,9') zu projizieren, und einem Magnetkopf (30) zum Anlegen eines Magnetfeldes an die andere Oberfläche der magneto-optischen Platte (9, 9'), welche Vorrichtung umfaßt:
ein Kassetten-Halteteil (20), das eine von außen zugeführte Plattenkassette (1,1') aufnimmt;
ein Verbindungsteil (40), welches so wirkt, daß der Magnetkopf (30) ausgelegt ist, sich zusammen mit der optischen Aufnahmeanordnung (14) in einer radialen Richtung der magneto-optischen Platte (9,9') zu bewegen, und das mit Bezug auf das Deck und die optische Aufnahmeanordnung (14) verschwenkbar ist; und
Magnetkopf-Hebemittel zum Anheben oder Absenken des Magnetkopfes mit Bezug auf eine eingesetzte Plattenkassette (1,1') je nachdem, ob die Plattenkassette (1,1') ein Aufzeichnungstyp (1) oder ein ausschließlicher Wiedergabetyp (1') ist, welche Vorrichtung **dadurch gekennzeichnet** ist, daß das Kassetten-Halteteil mit Bezug auf das Deck (10) verschwenkbar angebracht ist, so daß die empfangene Plattenkassette (1,1') zwischen einer Schließstellung, in der die Plattenkassette (1,1') auf der Oberseite des Decks (10) geladen ist, und einer Öffnungsposition bewegbar ist, in der die aufgenommene Plattenkassette (1,1') von der Oberseite des Decks (10) zum Entladen abgenommen ist;
daß der Magnetkopf normalerweise in einem abgestützten Zustand ist, in welchem der Magnetkopf sich in einer angehobenen Position befindet, wobei das Magnetkopf-Hebemittel ein Gleitteil (80) umfaßt, das mit Bezug auf das Kassetten-Halteteil (20) gleitbar angebracht ist, welches Gleitteil (80) ein Kontaktelement (85) besitzt, welches, falls die Plattenkassette (1,1') nicht zum Aufzeichnen einsetzbar ist, angeordnet ist, auf das Einladen der Plattenkassette (1) in eine Erkennungsnut (8') der Plattenkassette (1') eingesetzt zu werden, und welches, falls die Plattenkassette (1,1') zum Aufzeichnen einsetzbar ist, auf das Einladen der Plattenkassette (1) hin so angeordnet ist, daß sie durch eine vordere Kante der Plattenkassette (1) so angestoßen wird, daß das Gleitteil (80) in einer Einsetzrichtung der Plattenkassette (1) um ein vorbestimmtes Stück gleitet, welche Bewegung des Gleitteils (80) den Magnetkopf (30) dazu bringt, nicht mehr weiter im abgestützten Zustand gehalten zu werden und sich zu der magneto-optischen Platte (9) hin abzusenken.

2. Vorrichtung nach Anspruch 1, bei der das Verbindungsteil (40) einen Aufnahmeverbindungsabschnitt (41), der mit der optischen Aufnahmeanordnung (14) verbunden ist, einen Kopfverbindungsabschnitt (42), der mit dem Magnetkopf (30) verbunden ist, und ein Gelenk (30) zum Verbinden des Aufnahmeverbindungsabschnitts (41) mit dem Kopfverbindungsabschnitt (42) umfaßt.

3. Vorrichtung nach Anspruch 2, die weiter ein Federteil (44) zum elastischen Vorspannen des Kopfverbindungsabschnitts (42) zu dem Deck (10) hin umfaßt.

4. Vorrichtung nach Anspruch 2 oder 3, bei der der Winkel des Kopfverbindungsabschnitts (42) mit Bezug auf den Aufnahmeverbindungsabschnitt (41) einstellbar ist, um so die horizontale Position des Magnetkopfes (30) einzustellen.

5. Vorrichtung nach einem der vorangehenden Ansprüche, bei der das Gleitteil (80) so elastisch vorgespannt ist, daß es sich normalerweise in einer Position befindet, in der der Magnetkopf in dem gestützten Zustand gehalten ist.

6. Vorrichtung nach einem der vorangehenden Ansprüche, bei der im abgestützten Zustand ein Formschlußteil (86) des Gleitteils (80) angeordnet ist, mit einem vorstehenden Abschnitt (45) des Kopfverbindungsabschnitts zusammenzuwirken, um den Magnetkopf (30) in einer angehobenen Position zu halten.

7. Vorrichtung nach einem der vorangehenden Ansprüche, die weiter Gleitteil-Sperrmittel (90) zum Sperren des Bewegungszustandes des Gleitteils (80) und zum Lösen des Sperrzustandes umfaßt, durch einen Formschlußzustand mit einer Bewegung zum Ausziehen der Plattenkassette.

8. Vorrichtung nach Anspruch 7, bei der das Gleitteil-Sperrmittel (90) ein Gleitsperrmittel umfaßt, das dazu angeordnet ist, sich senkrecht zur Bewegungsrichtung des Gleitteils (80) zu bewegen.

9. Vorrichtung nach einem der vorangehenden Ansprüche, die weiter Ausziehmittel (50) umfaßt, um die in dem Kassetten-Halteteil (20) aufgenommene Plattenkassette (1, 1') auszuziehen, wenn das Kassetten-Halteteil (20) sich von einer beladenen Position zu einer entladenen Position bewegt.

10. Vorrichtung nach Anspruch 9, bei der das Ausziehmittel (50) umfaßt:
ein Ausziehteil (50), um die in dem Kassetten-Halteteil (20) aufgenommene Plattenkassette (1, 1') in einer Ausziehrichtung zu stoßen;
ein Sperrteil (60) zum Sperren des Ausziehteils (50); und
ein Sperr-Löseteil (70), das mit dem Kassetten-Halteteil (20) in Formschlußbeziehung ist, um so das Sperrteil (60) zur Betätigung zu bewegen.

11. Vorrichtung nach Anspruch 10, bei der das Ausziehteil (50) einen Kontaktabschnitt (54) zur Berührung mit der in dem Kassetten-Halteteil (20) eingesetzten Plattenkassette (1, 1') aufweist und ausgelegt ist, durch den Kontaktabschnitt (54) die Kassette in der Einsetzrichtung der Plattenkassette (1,1') zu bewegen, und elastisch vorgespannt ist, um die bewegte Plattenkassette (1,1') zurückzuholen.

12. Vorrichtung nach Anspruch 10 oder 11, bei der das Sperrteil (60) zur Drehbewegung und zur elastischen Vorspannung in einer Richtung schwenkbar angebracht ist und einen mit dem Ausziehteil (50) in Formschlußbeziehung stehenden Sperrstift und eine mit dem Sperr-Löseteil (70) in Formschlußbeziehung stehenden Lösestift (63) aufweist.

13. Vorrichtung nach Anspruch 10, 11 oder 12, bei der das Sperr-Löseteil (70) bewegbar ist und ein in nur einer Richtung elastisches Teil (71) aufweist, welches das Sperrteil (60) betätigt, wenn es in einer Richtung bewegt wird, und das Sperrteil (60) nicht betätigt, wenn es in der Gegenrichtung bewegt wird.

## Revendications

1. Dispositif d'enregistrement et/ou de reproduction magnéto-optique destiné à l'enregistrement et/ou la reproduction d'informations, utilisant une cartouche de disque (1,1') recevant un disque magnéto-optique (9, 9') dans un état de rotation et muni d'une platine (10) sur laquelle la cartouche de disque (1, 1') peut être disposée pour chargement, un ensemble de tête de lecture optique (14) placé de manière à permettre la mobilité sur la platine (10) afin de projeter un faisceau lumineux convergent sur une surface du disque magnéto-optique (9, 9'), et une tête magnétique (30) destinée à appliquer un champ magnétique sur l'autre surface du disque magnéto-optique (9, 9'), ledit dispositif comprenant :
un élément de maintien de cartouche (20) recevant une cartouche de disque introduite par l'extérieur (1, 1'),
un élément de raccordement (40) fonctionnant de telle manière que la tête magnétique (30) est disposée pour se déplacer en même temps que l'ensemble de tête de lecture optique (14) dans une direction radiale relativement au disque magnéto-optique (9, 9') et susceptible de pivoter relativement à la platine (10) et l'ensemble de tête de lecture optique (14) ; et
un moyen élévateur de tête magnétique destiné à lever ou abaisser la tête magnétique relativement à une cartouche de disque insérée (1, 1') selon que la cartouche de disque (1, 1') est de type enregistrable (1) ou de type à lecture seule (1');
l'appareil étant caractérisé en ce que ledit élément de maintien de cartouche est monté de manière à pouvoir pivoter relativement à la platine (10), de sorte que la cartouche de disque reçue (1, 1') soit mobile entre une position de fermeture dans laquelle la cartouche de disque (1, 1') est chargée au-dessus de la platine (10) et une position d'ouverture dans laquelle la cartouche de disque reçue (1, 1') est détachée de la partie supérieure de la platine (10) pour déchargement ; et en ce que ladite tête magnétique se trouve normalement dans un état soutenu dans lequel la tête magnétique se trouve dans une position levée, ledit moyen élévateur de tête magnétique comprenant un élément de patin (80) monté de manière à pouvoir glisser relativement à l'élément de maintien de cartouche (20), lequel élément patin (80) dispose d'un élément de contact (85) qui, si la cartouche de disque (1, 1') n'est pas enregistrable, est disposé, lors du chargement de la cartouche de disque (1), pour insertion dans une rainure de détection (8') de la cartouche de disque (1') et qui, si la cartouche de disque (1, 1') est enregistrable, est disposé, lors du chargement de la cartouche de disque (1), pour être poussé par une arête frontale de la cartouche de disque (1) de sorte que l'élément de patin (80) glisse dans une direction d'insertion de la cartouche de disque (1) d'une distance prédéterminée, ce mouvement de l'élément de patin (80) entraînant l'interruption du maintien de ladite tête magnétique (30) dans l'état soutenu et son abaissement en direction du disque magnéto-optique (9).

2. Dispositif selon la revendication 1, dans lequel ledit élément de raccordement (40) comporte une partie de raccordement de tête de lecture (41) raccordée à l'ensemble de tête de lecture optique (14), une partie de raccordement de tête (42) raccordée à la tête magnétique (30), et une articulation (43) destinée au raccordement de la partie de raccordement de tête de lecture (41) et de la partie de raccordement de tête (42).

3. Dispositif selon la revendication 2, comprenant en outre un élément de ressort (44) destiné à la sollicitation élastique de la partie de raccordement de tête (42) en direction de la platine (10).

4. Dispositif selon la revendication 2 ou 3, dans lequel l'angle de la partie de raccordement de tête (42) est réglable relativement à la partie de raccordement de tête de lecture (41) de manière à permettre le réglage de la position horizontale de la tête magnétique (30).

5. Dispositif selon l'une quelconque des revendications précédentes, dans lequel ledit élément de patin (80) est sollicité élastiquement de manière à se trouver normalement dans une position dans laquelle la tête magnétique est maintenue en position soutenue.

6. Dispositif selon l'une quelconque des revendications précédentes, dans laquelle, dans l'état soutenu, un élément d'enclenchement (86) dudit élément de patin (80) est disposé pour coopérer avec une partie en saillie (45) de ladite partie de raccordement de tête afin de maintenir la tête magnétique (30) en position levée.

7. Dispositif selon l'une quelconque des revendications précédentes, comprenant en outre un moyen de verrouillage de l'élément de patin (90) destiné à permettre le verrouillage de l'état de mouvement de l'élément de patin (80) et la désactivation de l'état de verrouillage, par enclenchement avec un mouvement d'extraction de la cartouche de disque.

8. Dispositif selon la revendication 7, dans lequel ledit moyen de verrouillage de l'élément de patin (90) comporte un élément de verrouillage de patin disposé de manière à permettre un déplacement perpendiculaire à la direction du déplacement du membre patin (80).

9. Dispositif selon l'une quelconque des revendications précédentes, comprenant en outre un moyen d'extraction (50) destiné à extraire la cartouche de disque (1, 1') réceptionnée dans l'élément de maintien de cartouche (20) lorsque l'élément de maintien de cartouche (20) se déplace d'une position chargée à une position déchargée.

10. Dispositif selon la revendication 9, dans lequel ledit moyen d'extraction (50) comporte :
un moyen d'extraction (50) destiné à pousser la cartouche de disque (1, 1') réceptionnée dans l'élément de maintien de cartouche (20) dans une direction d'extraction;
un élément de verrouillage (60) destiné à verrouiller l'élément d'extraction (50) ; et
un élément de désactivation de verrouillage (70) enclenché dans l'élément de maintien de cartouche (20) de manière à permettre un déplacement destiné à commander l'élément de verrouillage (60).

11. Dispositif selon la revendication 10, dans lequel ledit élément d'extraction (50) présente une partie de contact (54) destinée au contact avec la cartouche de disque (1, 1') insérée dans l'élément de maintien de cartouche (20), est disposé de manière à se déplacer par la partie de contact (54) dans la direction d'insertion de la cartouche de disque (1, 1') et est sollicité élastiquement pour ramener la cartouche de disque (1,1') déplacée.

12. Dispositif selon la revendication 10 ou 11, dans lequel ledit élément de verrouillage (60) est monté de manière à pouvoir pivoter et être sollicité élastiquement dans une direction, avec une goupille de verrouillage enclenchée avec l'élément d'extraction (50) et une goupille de déverrouillage (63) enclenchée avec l'élément de désactivation de verrouillage (70).

13. Dispositif selon la revendication 10, 11 ou 12 dans lequel ledit élément de désactivation de verrouillage (70) est mobile et est muni d'un élément élastique monodirectionnel (71) destiné à actionner l'élément de verrouillage (60) lorsqu'il est en mouvement dans une direction et à ne pas actionner l'élément de verrouillage (60) lorsqu'il est déplacé dans la direction opposée.
